# EUROPÄISCHE PATENTSCHRIFT

(11) **EP 3 909 410 B1**
(45) Veröffentlichungstag und Bekanntmachung des Hinweises auf die Patenterteilung: **15.02.2023**
(21) Anmeldenummer: 21172967.8
(22) Anmeldetag: 10.05.2021
(51) Int. Cl.: A01C 17/00, F16D 7/10, F16D 43/208, E01C 19/20, F16D 7/04, A01B 61/02

(54) **SCHLEUDERSTREUER ZUM AUSBRINGEN KOERNIGEN STREUGUTS, INSBESONDERE DUENGER**
CENTRIFUGAL SPREADER FOR DISTRIBUTING GRANULAR MATERIAL, IN PARTICULAR FERTILIZER
ÉPANDEUR DESTINÉ À L'ÉPANDAGE D'UNE MATIÈRE GRANULÉE, EN PARTICULIER ENGRAIS

(30) Priorität: 11.05.2020 DE 102020112620
(43) Veröffentlichungstag der Anmeldung: 17.11.2021
(73) Patentinhaber: Amazonen-Werke H. Dreyer SE & Co. KG, 49205 Hasbergen (DE)
(72) Erfinder: WALTER, Achim, 49078 Osnabrück (DE); KLEINE-HARTLAGE, Hubertus, 49186 Bad Iburg (DE)

(56) Entgegenhaltungen:
- EP-A1- 2 625 945
- EP-B1- 2 921 834
- EP-B1- 3 313 165
- DE-A1- 1 575 735
- DE-A1-102018 001 875

## Beschreibung

Die Erfindung betrifft einen Schleuderstreuer gemäß dem Oberbegriff des Anspruchs 1.

Ein gattungsgemäßer Schleuderstreuer ist aus EP 3 313 165 B1 bekannt. Demnach weist dieser Schleuderstreuer einen Antriebsstrang auf, bei dem eine kraftseitige Antriebswelle mittels eines Freilaufs an eine arbeitsseitige Welle einer Streuscheibe gekoppelt ist. Der Freilauf verhindert die Übertragung entgegen der Antriebsrichtung wirkender Drehmomente, also sogenannter Schleppmomente. Dadurch lässt sich ein in die arbeitsseitige Welle integriertes Drehmomentmodul zur magnetostriktiven Drehmomentmessung vor den negativen Auswirkungen von Schleppmomenten schützen. Insbesondere verringert sich eine an den verwendeten magnetostriktiven Drehmomentmodulen beobachtete Hysterese und eine entsprechende Offset-Verschiebung der Drehmomentmessung aufgrund wechselnder Drehrichtungen der arbeitsseitigen Welle. Dadurch soll die Sensorgenauigkeit nachhaltig verbessert werden.

Allerdings können an der Streuscheibe auftretende Schleppmomente dann nicht erfasst werden. Dies könnte jedoch beispielsweise hilfreich sein, die Massenträgheit einer Streuscheibe, beispielsweise nach dem Abschalten des zugehörigen Dosierorgans, beim Auslaufen der Streuscheibe zu überwachen.

Es besteht daher Bedarf für einen Schleuderstreuer mit einem hinsichtlich der kontrollierten Übertragung und/oder Erfassung von Schleppmomenten erweiterten Funktionsumfang.

Die gestellte Aufgabe wird mit einem Schleuderstreuer gemäß Anspruch 1 gelöst. Demnach umfasst der Schleuderstreuer wenigstens eine Streuscheibe, insbesondere zwei Streuscheiben, zum Ausbringen körnigen Streuguts, insbesondere Dünger, und einen Antriebsstrang zum Antreiben der Streuscheibe. Der Antriebsstrang umfasst eine kraftseitige Welle zur drehsteifen Ankopplung an einen Drehantrieb, eine drehsteif an die jeweilige Streuscheibe gekoppelte arbeitsseitige Welle und ein Drehmomentmodul zur magnetostriktiven Erfassung des von der arbeitsseitigen Welle übertragenen Drehmoments.

Erfindungsgemäß umfasst der Schleuderstreuer mindestens eine antriebstechnisch zwischen kraftseitiger und arbeitsseitiger Welle angeordnete Rutschkupplung, die zu bidirektionalen Drehmomentübertragung ausgebildet ist, und deren Kupplungsdrehmoment dabei in Antriebsrichtung größer ist als in Schlepprichtung.

Dadurch lassen sich die in Schlepprichtung im Antriebsstrang, insbesondere am Drehmomentmodul, möglichen Schleppmomente gezielt reduzieren, ohne diese vollständig zu eliminieren. Somit können die derart reduzierten Schleppmomente, also unterhalb Kupplungsdrehmoments in Schlepprichtung, zu Überwachungszwecken genutzt werden, während für den Antriebsstrang potentiell schädliche Schleppmomente, also oberhalb des Kupplungsdrehmoments in Schlepprichtung, nicht übertragen werden.

Dadurch lässt sich beispielsweise kontrollieren, ob eine Streuscheibe beim Auslaufen ordnungsgemäß frei von Streugut ist, oder ob dieses aufgrund einer Fehlfunktion des zugeordneten Dosierorgans noch auf die Streuscheibe rieselt.

Das Kupplungsdrehmoment in Schlepprichtung kann beispielsweise unter einem Schwellenwert liegen, über dem das Drehmomentmodul eine die Drehmomentmessung störende oder eine messtechnisch nicht zu kompensierende Hysterese aufweist.

Unter dem jeweiligen Kupplungsdrehmoment ist das Auslösemoment zu verstehen, bei dem die Rutschkupplung, in der jeweiligen Drehrichtung und ausgehend von einer drehsteifen Ankopplung, beginnt durchzurutschen.

Vorzugsweise ist das Kupplungsdrehmoment der Rutschkupplung in Antriebsrichtung wenigstens doppelt so groß wie das Kupplungsdrehmoment in Schlepprichtung. Dadurch lassen sich beispielsweise Komponenten des Antriebsstrangs in Schlepprichtung wirksam vor Überlast schützen. Dies gilt ebenso für kommerziell verfügbare magnetostriktive Drehmomentmodule, die dann insbesondere bidirektional sowohl in Arbeitsrichtung als auch in Schlepprichtung Drehmomente messen können.

Vorzugsweise ist die Rutschkupplung eine Sperrkörperkupplung, deren Sperrkörper und/oder damit korrespondierende Sperrnuten bezüglich Antriebsrichtung und Schlepprichtung asymmetrisch ausgebildet sind. Die Sperrkörperkupplung ist dann insbesondere eine bezüglich der Kupplungsdrehmomente in Antriebsrichtung und Schlepprichtung asymmetrische Sternratsche.

Die Rutschkupplung unterscheidet sich von einem Freilauf dadurch, dass sie bidirektional Drehmomente übertragen kann, also Schleppmomente im Gegensatz zum Freilauf nicht völlig eliminiert.

Die Sperrkörper und/oder Sperrnuten wirken dann so zusammen, dass das Kupplungsdrehmoment / Auslösemoment der Sperrkörperkupplung in Schlepprichtung geringer ist als in Arbeitsrichtung.

Sperrkörperkupplungen lassen sich durch eine asymmetrische Ausbildung ihrer Sperrnuten und/oder Sperrkörper vergleichsweise einfach an jeweils in Antriebsrichtung und Schlepprichtung zu übertragende Kupplungsdrehmomente / Auslösemomente anpassen. Zudem sind derartige Sperrkörperkupplungen besonders robust und langlebig.

Vorzugsweise sind die in Antriebsrichtung wirkenden Flanken der Sperrnuten steiler als deren in Schlepprichtung wirkenden Flanken. Die Sperrnuten sind üblicherweise in einem im Wesentlichen zylindrischen Gehäuse der Rutschkupplung nach innen weisend ausgebildet und lassen sich durch mechanische Bearbeitung des Gehäuses auf vergleichsweise einfache Weise an die jeweils zu übertragenden Antriebsmomente und Schleppmomente anpassen.

Vorzugsweise ist das Drehmomentmodul bidirektional belastbar ausgebildet. Darunter ist zu verstehen, dass die Messfunktion des Drehmomentmoduls bidirektional gegeben ist. Insbesondere können Antriebsmomente und Schleppmomente dann unmittelbar aufeinanderfolgend abwechselnd mit dem Drehmomentmodul gemessen werden.

Derartige Drehmomentmodule können dann insbesondere auch unabhängig von der Arbeitsdrehrichtung der zugeordneten Arbeitswelle verwendet werden, also gleichermaßen in einer in Fahrtrichtung des Schleuderstreuers gesehen rechten und linken arbeitsseitigen Welle. Dies vereinfacht die Auslegung und Konstruktion des Antriebsstrangs des Schleuderstreuers.

Vorzugsweise umfasst das Drehmomentmodul eine in Antriebsrichtung und in Schlepprichtung vorbelastete Messwelle. Darunter ist zu verstehen, dass der Sensor des Drehmomentmoduls ohne Einwirkung äußerer Antriebsmomente oder Schleppmomente intern vorbelastet ist, so dass sich ansonsten unerwünschte Hystereseeffekte des Sensors unterdrücken lassen. Derartige Drehmomentmodule sind bidirektional im Wesentlichen hysteresefrei und eignen sich daher besonders gut für eine von der Arbeitsdrehrichtung unabhängige Verwendung in Antriebswellen.

Vorzugsweise ist das Drehmomentmodul jeweils an einer in Fahrtrichtung des Schleuderstreuers gesehen rechten und linken arbeitsseitigen Welle mit einander entgegengesetzter Antriebsrichtung angeordnet. Dabei umfasst der Schleuderstreuer ferner eine Auswerteeinheit, die zur Auswertung von mit den Drehmomentmodulen gemessenen Antriebsmomenten mit entgegengesetzten Vorzeichen ausgebildet ist.

Somit können an der rechten und linken arbeitsseitigen Welle identische Drehmomentmodule verwendet werden, deren bidirektionale Belastbarkeit in einer Erfassung von Antriebsmomenten mit entgegengesetzten Vorzeichen resultiert. Das heißt, die Drehmomentmodule messen an der rechten arbeitsseitigen Welle Antriebsmomente mit positivem Vorzeichen und an der linken arbeitsseitigen Welle Antriebsmomente mit negativem Vorzeichen, oder umgekehrt.

Dies vereinfacht die Konstruktion und Lagerhaltung hinsichtlich der verwendeten Drehmomentmodule bei einem Schleuderstreuer mit einer rechten und einer linken Streuscheibe.

Gegebenenfalls mit den Drehmomentmodulen gemessene Schleppmomente weisen dann jeweils den an der gleichen arbeitsseitigen Welle auftretenden Antriebsmomenten entgegengesetzte Vorzeichen auf.

Vorzugsweise umfasst der Schleuderstreuer eine Auswerteeinheit, die zur Auswertung von mit den Drehmomentmodulen gemessenen Antriebsmomenten und Schleppmomenten ausgebildet ist. Damit lassen sich Streuscheiben sowohl im regulären Arbeitsbetrieb durch Messung von Arbeitsmomenten überwachen als auch nach Abschalten der Streuscheiben, also beim Auslaufen der Streuscheiben, durch Messung dabei auftretender Schleppmomente. Dadurch lässt sich die ordnungsgemäße Funktion des Schleuderstreuers umfassender überwachen.

Vorzugsweise umfasst der Antriebsstrang ferner ein Verteilergetriebe mit einem Verteilerantrieb und zwei Verteilerabtrieben, die einer in Fahrtrichtung des Schleuderstreuers gesehen rechten und linken Streuscheibe zugeordnet sind. Die Rutschkupplung ist dann zwischen der kraftseitigen Welle und dem Verteilerantrieb angeordnet. Dadurch kann der Antriebsstrang und insbesondere die Drehmomentsensoren mit nur einer einzigen Rutschkupplung wirksam gegen eine Überlastung durch unzulässige Schleppmomente geschützt werden.

Bei einer weiteren günstigen Ausführungsform umfasst der Antriebsstrang ein Verteilergetriebe mit einem Verteilerantrieb und zwei Verteilerabtrieben, die einer in Fahrtrichtung gesehen rechten und linken Streuscheibe zugeordnet sind, wobei die Rutschkupplung dann jeweils zwischen Verteilerabtrieb und der zugeordneten kraftseitigen Welle angeordnet ist.

Damit lässt sich ebenso ein Überlastungsschutz des Antriebsstrangs und insbesondere der Drehmomentsensoren gegenüber unzulässigen Antriebsmomenten und Schleppmomenten bereitstellen. Zudem können die Rutschkupplungen dann für geringere Maximalbelastungen und somit kompakter ausgelegt werden als bei einer Anordnung an der kraftseitigen Welle.

In einer weiteren vorteilhaften Ausführungsform umfasst der Antriebsstrang ein Verteilergetriebe mit einem Verteilerantrieb und zwei Verteilerabtrieben, die einer in Fahrtrichtung gesehen rechten und linken Streuscheibe zugeordnet sind, wobei Rutschkupplungen jeweils zwischen dem Verteilerantrieb und den Verteilerabtrieben angeordnet sind.

Eine weitere vorteilhafte Weiterbildung zeichnet sich dadurch aus, dass das Drehmomentmodul jeweils an dem, der rechten und linken Streuscheibe zugeordneten, Verteilerabtrieb angeordnet ist. Infolge dieser Weiterbildung können die Drehmomentmodule in besonders geschützter Lage im Verteilergetriebe angeordnet sein.

Vorzugsweise umfasst der Schleuderstreuer ferner einen drehsteif an die kraftseitige Welle gekoppelten Zapfwellenanschluss. Damit ist ein Antrieb des Schleuderstreuers durch einen zugeordneten Schlepper auf prinzipiell bekannte Weise möglich.

Bei einer weiteren günstigen Ausgestaltung umfasst der Schleuderstreuer einen drehsteif an die kraftseitige Welle gekoppelten Antriebsmotor. Der Schleuderstreuer ist dann antriebstechnisch unabhängig von einem Schlepper und dann beispielsweise selbstfahrend ausgebildet.

Bevorzugte Ausführungsformen der Erfindung sind zeichnerisch dargestellt. Es zeigen:
- Figur 1: eine schematische Darstellung eines Schleuderstreuers mit einer kraftseitigen Rutschkupplung;
- Figur 2: eine schematische Darstellung eines Schleuderstreuers mit zwei arbeitsseitigen Rutschkupplungen; und
- Figur 3: eine schematische Darstellung einer Rutschkupplung.

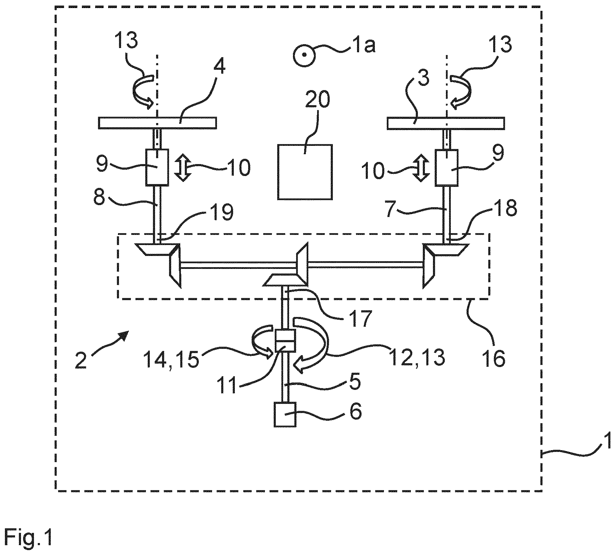

Wie die Figur 1 erkennen lässt, umfasst der Schleuderstreuer 1 in einer ersten bevorzugten Ausführungsform einen Antriebsstrang 2 mit einer in Fahrtrichtung 1a des Schleuderstreuers 1 gesehen linken Streuscheibe 3 und rechten Streuscheibe 4. Die Streuscheiben 3, 4 dienen zum Ausbringen körnigen Streuguts, insbesondere Düngers, was prinzipiell bekannt ist und daher nicht im Detail dargestellt und beschrieben ist.

Der Antriebsstrang 2 umfasst ferner eine kraftseitige Welle 5 zur drehsteifen Ankopplung an einen Drehantrieb 6, jeweils drehsteif an die linke und rechte Streuscheibe 3, 4 gekoppelte arbeitsseitigen Wellen 7, 8 und je ein Drehmomentmodul 9 zur magnetostriktiven und insbesondere bidirektionalen Erfassung der von den arbeitsseitigen Wellen 7, 8 übertragenen Drehmomente 10.

Der Antriebsstrang 2 umfasst eine antriebstechnisch zwischen kraftseitiger Welle 5 und den arbeitsseitigen Wellen 7, 8 angeordnete Rutschkupplung 11, die zur bidirektionalen Drehmomentübertragung ausgebildet ist, und deren Kupplungsdrehmoment 12 in Antriebsrichtung 13 größer ist als deren Kupplungsdrehmoment 14 in Schlepprichtung 15.

Die Rutschkupplung 11 unterscheidet sich von einem Freilauf dadurch, dass sie sowohl in Antriebsrichtung 13 als auch in Schlepprichtung 15 ein jeweils vorgegebenes Kupplungsdrehmoment 12, 14 überträgt im Sinne eines jeweiligen Auslösemoments, bei dessen Überschreiten die Rutschkupplung 11 beginnt durchzurutschen.

Wie die Figur 1 ferner erkennen lässt, umfasst der Antriebsstrang 2 ferner ein Verteilergetriebe 16 mit einem Verteilerantrieb 17 und zwei Verteilerabtrieben 18, 19, die an die rechte und linke Streuscheibe 3, 4 drehsteif gekoppelt sind. In einer nicht dargestellten Ausführungsform ist je ein Drehmomentmodul 9 zwischen Verteilerantrieb 17 und dem Verteilerabtrieb 18, 19 angeordnet.

Die kraftseitige Welle 5 würde normalerweise aus der Zeichenebene herausragen. Das Verteilergetriebe 16 ist lediglich der besseren Darstellung wegen in der Fig. 1 nach unten geklappt.

Die Rutschkupplung 11 ist demnach vorzugsweise zwischen der kraftseitigen Welle 5 und dem Verteilerantrieb 17 angeordnet und schützt somit beide Drehmomentmodule 9 an den arbeitsseitigen Wellen 7, 8. Es ist somit nur eine einzige Rutschkupplung 11 nötig, um den Antriebsstrang 2 und die Drehmomentmodule 9 für die in Fahrtrichtung gesehen linke und rechte Streuscheibe 3, 4 gegen Überlastung durch Arbeitsmomente und Schleppmomente zu schützen.

Schematisch dargestellt ist ferner eine elektronische Auswerteeinheit 20 zur Auswertung der mittels der Drehmomentmodule 9 gemessenen Drehmomente 10. Damit können wenigstens die Antriebsmomente der Streuscheiben 3, 4 auf prinzipiell bekannte Weise zur Überwachung der Streugutabgabe auf die Streuscheiben 3, 4 gemessen werden.

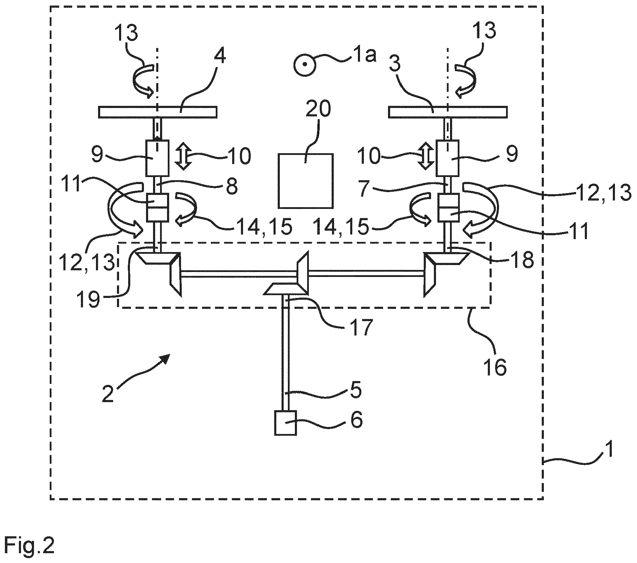

Wie die Figur 2 erkennen lässt, ist ebenso eine alternative Ausführungsform des Schleuderstreuers 1 denkbar, die sich im Wesentlichen nur durch die Anordnung der in diesem Fall zwischen jedem Verteilerabtrieb 18, 19 und der zugeordneten arbeitsseitigen Welle 7, 8 vorhandenen Rutschkupplung 11 unterscheidet. In diesem Fall ist also jeder Streuscheibe 3, 4 eine separate Rutschkupplung 11 zugeordnet. In einer nicht dargestellten Ausführungsform wäre dies ebenfalls der Fall, indem zwischen dem Verteilerantrieb 17 und den Verteilerabtrieben 18, 19 jeweils eine Rutschkupplung 11 angeordnet ist.

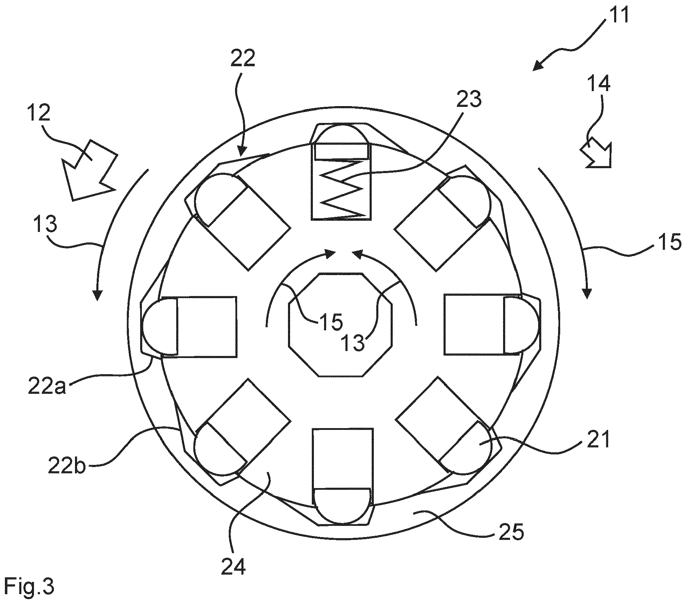

Wie die Figur 3 im schematischen Querschnitt erkennen lässt, ist die Rutschkupplung 11 vorzugsweise als Sperrkörperkupplung ausgebildet, deren Sperrkörper 21 und/oder damit korrespondierende Sperrnuten 22 bezüglich der Antriebsrichtung 13 und der Schlepprichtung 15 asymmetrisch ausgebildet sind. Demnach sind die Sperrkörper 21 beispielsweise auf prinzipiell bekannte Weise mittels Druckfedern 23 (nur eine davon dargestellt) in einer Nabe 24 der Rutschkupplung 11 radial beweglich gelagert. Ferner sind die Sperrnuten 22 in einen zylindrischen Gehäuse 25 der Rutschkupplung 11 ausgebildet. Die Antriebsrichtung 13 und die Schlepprichtung 15 sind hier auf die Nabe 24 bezogen eingezeichnet. Von der Abtriebsseite der Rutschkupplung 11 her, also vom zylindrischen Gehäuse 25, wirken die jeweiligen Drehmomente in bekannter Weise entgegen der hier angedeuteten Antriebsrichtung 13 bzw. Schlepprichtung 15.

Die Besonderheit der Rutschkupplung 11 liegt darin, dass die in Antriebsrichtung 13 wirkenden Flanken 22a der Sperrnuten 22 steiler sind als deren in Schlepprichtung 15 wirkende Flanken 22b.

Die Sperrkörper 21 können an die hinsichtlich der Arbeitsrichtung 13 und der Schlepprichtung 15 asymmetrischen Flanken 22a, 22b korrespondierend angepasst sein oder aber demgegenüber symmetrisch ausgebildet sein. Die Darstellung ist diesbezüglich lediglich schematisch.

Die Sperrkörper 21 arbeiten prinzipiell als federvorbelastete Nocken, die radial in die Sperrnuten 22 des Gehäuses 25 eingreifen. Bei Überschreitung des Kupplungsdrehmoments 12 in Antriebsrichtung 13 bzw. des Kupplungsdrehmoments 14 in Schlepprichtung 15 werden die Sperrkörper 21 von den Flanken 22a, 22b in Folge vektorieller Kraftzerlegung gegen die Druckfedern 23 gedrückt, bis der Formschluss der Sperrkörper 21 mit den Sperrnuten 22, also zum Gehäuse 25 hin, aufgehoben ist.

Dies ermöglicht den Schlupf der Sperrkörper 21 und damit der Nabe 24 bezüglich des Gehäuses 25 bis zum Erreichen der jeweils nächsten Sperrnut 22. Diese wird dann bei weiterem Überschreiten des Kupplungsdrehmoments 12, 14, wie oben beschrieben, erneut vom Sperrkörper 21 überwunden, so dass dieser unter regelmäßiger Abwechslung eines Eingriffs in die Sperrnuten 22 und eines Schlupfs zwischen den Sperrnuten 22 unter Erzeugung pulsierender Drehmomente am Gehäuse 25 entlangläuft.

Solche drehmomentpulsierenden Sperrkörperkupplungen werden daher auch als Sternratschen bezeichnet.

Die Kupplungsdrehmomente 12, 14 in Antriebsrichtung 13 und Schlepprichtung 15 lassen sich beispielsweise durch die Federkraft der einzelnen Druckfedern 23, die Anzahl der Sperrkörper 21 und Sperrnuten 22 und/oder die Flankensteilheit der jeweils in Antriebsrichtung 13 oder Schlepprichtung 15 wirkenden Flanken 22a, 22b der Sperrnuten 22 vorgeben.

Hierbei können sich die in Antriebsrichtung 13 und Schlepprichtung 15 wirkenden Flanken 22a, 22b sowohl hinsichtlich ihrer mittleren Steigung als auch hinsichtlich ihrer Kontur, also ihres Steigungsverlaufs, unterscheiden. Beispielsweise sind lineare, konvexe und konkave Flankenabschnitte zur geeigneten Anpassung der entgegengesetzten Kupplungsdrehmomente 12, 14 möglich und gegebenenfalls auch kombinierbar.

Vorzugsweise ist das Kupplungsdrehmoment 12 in Antriebsrichtung 13 wenigstens doppelt so groß und insbesondere wenigstens drei Mal so groß wie das Kupplungsdrehmoment 14 in Schlepprichtung 15. Damit lassen sich die mechanischen Komponenten des Antriebsstrangs 2 ebenso wie die Drehmomentmodule 9 zuverlässig gegen eine Überlastung durch Schleppmomente, also in Schlepprichtung 15 wirkende Drehmomente 10, schützen.

Die Drehmomentmodule 9 sind vorzugsweise derart bidirektional belastbar, dass sie zur Messung der Drehmomente 10 in entgegengesetzten Drehrichtungen geeignet sind, also sowohl in Antriebsrichtung 13 als auch in Schlepprichtung 15.

Dies lässt sich beispielsweise durch eine prinzipiell bekannte interne Vorbelastung einer in den Drehmomentmodulen 9 vorhandenen Messwelle (nicht dargestellt) erreichen. Dadurch lassen sich Hystereseeffekte aufgrund eines Wechsels der Belastungsrichtung, also beispielsweise von der Antriebsrichtung 13 in die Schlepprichtung 15, bei der Drehmomentmessung auf ein unkritisches Maß unterdrücken oder ganz eliminieren.

Das heißt, derartige Drehmomentmodule 9 eignen sich in besonderem Maße dafür, Drehmomentmessungen in Antriebsrichtung 13 und in Schlepprichtung 15 in unmittelbaren Wechsel vorzunehmen. Derartige Richtungswechsel sind dann ohne nennenswerte, die Messgenauigkeit beeinträchtigende Hystereseeffekte möglich.

Entsprechend können dann in den linken und rechten arbeitsseitigen Wellen 7, 8 identische Drehmomentmodule 9 zur magnetostriktiven Erfassung der Drehmomente 10 verwendet werden, obwohl die Antriebsrichtungen 13 der arbeitsseitigen Wellen 7, 8 einander entgegengesetzt sind. Dies vereinfacht die Konstruktion des Antriebsstrangs 2 und reduziert den Aufwand für die Lagerhaltung der Drehmomentmodule 9 und zugeordneter Komponenten.

Im normalen Arbeitsbetrieb des Schleuderstreuers 1 treten dann beispielsweise an der linken arbeitsseitigen Welle 7 Drehmomente 10 mit positivem Vorzeichen auf, an der rechten arbeitsseitigen Welle 8 dagegen Drehmomente 10 mit negativem Vorzeichen, oder umgekehrt. Die Drehmomentmodule 9 sind hierzu an die Auswerteeinheit 20 angeschlossen, die dann zur Auswertung von Messsignalen sowohl mit positivem als auch mit negativem Vorzeichen ausgebildet ist. Dadurch können Drehmomente 10 in Antriebsrichtung 13 mit unterschiedlichen Vorzeichen für die linke und rechte Fahrseite des Schleuderstreuers 1 gleichzeitig erfasst und ausgewertet werden. Ebenso bei Bedarf Drehmomente 10 in Schlepprichtung 15, also Schleppmomente, die Messsignale mit dann jeweils den Messsignalen der Antriebsmomente entgegengesetzten Vorzeichen erzeugen.

Somit kann die Auswerteeinheit 20 dazu verwendet werden, Schleppmomente nach dem Abschalten der Streuscheiben 3, 4 beim Auslaufen der Streuscheiben 3, 4 zu überwachen. Dadurch ließe sich beispielsweise feststellen, ob die Streuscheiben 3, 4 trotz ausgeschaltetem Dosierorgan fehlerhaft noch mit Streugut, insbesondere Dünger, beladen werden oder nicht.

Sollwerte für Schleppmomente während des Auslaufens der Streuscheiben 3, 4 könnten für unterschiedliche Konfigurationen der Streuscheiben 3, 4 und/oder Streugüter und/oder Phasen des Auslaufens der Streuscheiben 3, 4 durch empirische Datenerfassung vorgegeben werden oder dergleichen. Dadurch ließe sich eine zusätzliche Überwachungsfunktion beispielsweise hinsichtlich eines ordnungsgemäßen Ausschaltens der Dosierorgane an den Streuscheiben 3, 4 bereitstellen.

Der in den Figuren 1 und 2 schematisch angedeutete Drehantrieb 6 ist vorzugsweise ein Zapfwellenanschluss für einen Schlepper oder dergleichen, könnte aber auch ein am Schleuderstreuer 1 mitgeführter Antriebsmotor sein, was beispielsweise bei einem selbstfahrenden Schleuderstreuer denkbar wäre.

Im Arbeitsbetrieb des Schleuderstreuers 1 können somit Antriebsmomente, also Drehmomente 10 in Antriebsrichtung 13, für wenigstens eine Streuscheibe 3, 4 auf prinzipiell bekannte Weise kontinuierlich überwacht werden, um das Ausbringen des körnigen Streuguts, insbesondere Düngers, zu überwachen.

Zusätzlich können Schleppmomente unterhalb des Kupplungsdrehmoments 14, beispielsweise beim Auslaufen der Streuscheiben 3, 4 in Schlepprichtung 15 auftretende Drehmomente 10, mittels der Drehmomentmodule 9 und der Auswerteeinheit 20 überwacht werden.

Als Rutschkupplung eignen sich insbesondere Sperrkörperkupplungen in Form sogenannter Sternratschen mit asymmetrischer Auslösewirkung. Prinzipiell denkbar wäre aber auch eine reibschlüssig arbeitende Rutschkupplung 11. Dies rutscht dann ebenso wie die Sperrkörperkupplung in Schlepprichtung 15 ab einem Auslösemoment / Kupplungsdrehmoment 14 durch, das kleiner ist als das Auslösemoment / Kupplungsdrehmoment 12 in Antriebsrichtung 13.

## Patentansprüche

1. Schleuderstreuer (1) mit wenigstens einer Streuscheibe (3, 4) zum Ausbringen körnigen Streuguts, insbesondere Dünger, und mit einem Antriebsstrang (2) für die Streuscheibe, wobei der Antriebsstrang eine kraftseitige Welle (5) zur drehsteifen Ankopplung an einen Drehantrieb (6), eine drehsteif an die jeweilige Streuscheibe gekoppelte arbeitsseitige Welle (7, 8) und ein Drehmomentmodul (9) zur magnetostriktiven Erfassung des von der arbeitsseitigen Welle übertragenen Drehmoments (10) umfasst, **gekennzeichnet durch** mindestens eine antriebstechnisch zwischen kraftseitiger und arbeitsseitiger Welle angeordnete Rutschkupplung (11), die zur bidirektionalen Drehmomentübertragung ausgebildet ist, und deren Kupplungsdrehmoment (12, 14) in Antriebsrichtung (13) größer ist als in Schlepprichtung (15).

2. Schleuderstreuer nach Anspruch 1, wobei das Kupplungsdrehmoment (12) in Antriebsrichtung (13) wenigstens doppelt so groß ist wie das Kupplungsdrehmoment (14) in Schlepprichtung (15).

3. Schleuderstreuer nach Anspruch 1 oder 2, wobei die Rutschkupplung (11) eine Sperrkörperkupplung ist, deren Sperrkörper (21) und/oder damit korrespondierende Sperrnuten (22) bezüglich Antriebsrichtung (13) und Schlepprichtung (15) asymmetrisch ausgebildet sind.

4. Schleuderstreuer nach Anspruch 3, wobei die in Antriebsrichtung (13) wirkenden Flanken (22a) der Sperrnuten (22) steiler sind als deren in Schlepprichtung (15) wirkende Flanken (22b).

5. Schleuderstreuer nach wenigstens einem der vorigen Ansprüche, wobei das Drehmomentmodul (9) bidirektional belastbar ausgebildet ist.

6. Schleuderstreuer nach Anspruch 5, wobei das Drehmomentmodul (9) eine in Antriebsrichtung (13) und in Schlepprichtung (15) vorbelastete Messwelle umfasst.

7. Schleuderstreuer nach Anspruch 5 oder 6, wobei das Drehmomentmodul (9) jeweils an einer in Fahrtrichtung des Schleuderstreuers (1) gesehen rechten und linken arbeitsseitigen Welle (7, 8) mit einander entgegengesetzter Antriebsrichtung (13) angeordnet ist, und wobei der Schleuderstreuer ferner eine Auswerteeinheit (20) umfasst, die zur Auswertung von mit den Drehmomentmodulen gemessenen Antriebsmomenten mit entgegengesetzten Vorzeichen ausgebildet ist.

8. Schleuderstreuer nach einem der Ansprüche 5 bis 7, wobei der Schleuderstreuer (1) ferner eine Auswerteeinheit (20) umfasst, die zur Auswertung von mit den Drehmomentmodulen (9) gemessenen Antriebsmomenten und Schleppmomenten ausgebildet ist.

9. Schleuderstreuer nach einem der vorigen Ansprüche, wobei der Antriebsstrang (2) ferner ein Verteilergetriebe (16) mit einem Verteilerantrieb (17) und zwei Verteilerabtrieben (18, 19) umfasst, die einer in Fahrtrichtung des Schleuderstreuers (1) gesehen rechten und linken Streuscheibe (3, 4) zugeordnet sind, wobei die Rutschkupplung (11) zwischen der kraftseitigen Welle (5) und dem Verteilerantrieb (17) angeordnet ist.

10. Schleuderstreuer nach einem der Ansprüche 1 bis 8, ferner umfassend ein Verteilergetriebe (16) mit einem Verteilerantrieb (17) und zwei Verteilerabtrieben (18, 19), die einer in Fahrtrichtung gesehen rechten und linken Streuscheibe (3, 4) zugeordneten sind, wobei die Rutschkupplung (11) jeweils zwischen Verteilerabtrieb (18, 19) und der zugeordneten arbeitsseitigen Welle (7, 8) angeordnet ist.

11. Schleuderstreuer nach wenigstens einem der vorigen Ansprüche, wobei der Drehantrieb (6) ein drehsteif an die kraftseitige Welle (5) gekoppelter Zapfwellenanschluss ist.

12. Schleuderstreuer nach wenigstens einem der Ansprüche 1 bis 10, wobei der Drehantrieb (6) ein am Schleuderstreuer (1) angeordneter und drehsteif an die kraftseitige Welle (5) gekoppelter Antriebsmotor ist.

## Claims

1. A centrifugal spreader (1) comprising at least one spreading disk (3, 4) for spreading granular grit, in particular fertilizer, and comprising a drive train (2) for the spreading disk, wherein the drive train comprises a force-side shaft (5) for rotationally rigid coupling to a rotary drive (6), a work-side shaft (7, 8) coupled to the respective spreading disk in a rotationally rigid manner, and a torque module (9) for magnetostrictive detection of the torque (10) transmitted by the work-side shaft, **characterized by** at least one slip clutch (11), arranged in drive terms between force-side and work-side shaft, that is designed for bidirectional torque transmission and whose coupling torque (12, 14) is greater in the drive direction (13) than in the drag direction (15).

2. The centrifugal spreader according to claim 1, wherein the coupling torque (12) in the drive direction (13) is at least twice as great as the coupling torque (14) in the drag direction (15).

3. The centrifugal spreader according to claim 1 or 2, wherein the slip clutch (11) is a retaining body coupling whose retaining body (21) and/or retaining grooves (22) corresponding therewith are designed asymmetrically with respect to the drive direction (13) and drag direction (15).

4. The centrifugal spreader according to claim 3, wherein the flanks (22a) of the retaining grooves (22), said flanks (22a) acting in the drive direction (13), are steeper than those flanks (22b) acting in the drag direction (15).

5. The centrifugal spreader according to at least one of the preceding claims, wherein the torque module (9) is designed to be bidirectionally loadable.

6. The centrifugal spreader according to claim 5, wherein the torque module (9) comprises a measuring shaft pre-loaded in the drive direction (13) and in the drag direction (15).

7. The centrifugal spreader according to claim 5 or 6, wherein the torque module (9) is arranged, to the right and left in the direction of travel of the centrifugal spreader (1), respectively on a work-side shaft (7, 8), said shafts (7, 8) having opposite drive direction (13), and wherein the centrifugal spreader further comprises an evaluation unit (20) which is designed to evaluate drive torques with opposite signs as measured with the torque modules.

8. The centrifugal spreader according to any of claims 5 to 7, wherein the centrifugal spreader (1) further comprises an evaluation unit (20) that is designed to evaluate drive torques and drag torques as measured with the torque modules (9).

9. The centrifugal spreader according to any of the preceding claims, wherein the drive train (2) further comprises a transfer gearbox (16) with a distributor drive (17) and two power take-offs (18, 19) which are associated with a right and left spreading disk (3, 4) as seen in the direction of travel of the centrifugal spreader (1), wherein the slip clutch (11) is arranged between the force-side shaft (5) and the distributor drive (17).

10. The centrifugal spreader according to any of claims 1 to 8, further comprising a transfer gearbox (16) with a distributor drive (17) and two power take-offs (18, 19) that are associated with a right and left spreading disk (3, 4) as seen in the direction of travel, wherein the slip clutch (11) is arranged respectively between the power take-off (18, 19) and the associated work-side shaft (7, 8).

11. The centrifugal spreader according to at least one of the preceding claims, wherein the rotary drive (6) is a power take-off connection coupled in a rotationally rigid manner to the force-side shaft (5).

12. The centrifugal spreader according to at least one of claims 1 to 10, wherein the rotary drive (6) is a drive motor arranged at the centrifugal spreader (1) and coupled to the force-side shaft (5) in a rotationally rigid manner.

## Revendications

1. Épandeur centrifuge (1) comprenant au moins un disque d'épandage (3, 4) pour l'épandage de matériau d'épandage granuleux, en particulier d'engrais, et comprenant un groupe motopropulseur (2) pour le disque d'épandage, le groupe motopropulseur comprenant un arbre côté puissance (5) pour le couplage rigide en rotation à un dispositif d'entraînement en rotation (6), un arbre côté travail (7, 8) couplé de manière rigide en rotation au disque d'épandage respectif et un module de couple (9) pour la détection magnétostrictive du couple (10) transmis par l'arbre côté travail, **caractérisé par** au moins un accouplement à friction (11) disposé selon la technique d'entraînement entre l'arbre côté puissance et l'arbre côté travail, lequel est conçu pour la transmission bidirectionnelle de couple et dont le couple d'accouplement (12, 14) dans la direction d'entraînement (13) est supérieur à celui dans la direction de traction (15).

2. Épandeur centrifuge selon la revendication 1, dans lequel le couple d'embrayage (12) dans la direction d'entraînement (13) est au moins deux fois plus grand que le couple d'embrayage (14) dans la direction de traction (15).

3. Épandeur centrifuge selon la revendication 1 ou 2, dans lequel l'accouplement à friction (11) est un accouplement à corps de blocage, dont le corps de blocage (21) et/ou les rainures de blocage (22) correspondantes sont conçues de manière asymétrique par rapport à la direction d'entraînement (13) et à la direction de traction (15).

4. Épandeur centrifuge selon la revendication 3, dans lequel les flancs (22a) des rainures de blocage (22) agissant dans la direction d'entraînement (13) sont plus raides que les flancs (22b) agissant dans la direction de traction (15).

5. Épandeur centrifuge selon au moins l'une quelconque des revendications précédentes, dans lequel le module de couple (9) est conçu de façon à pouvoir être chargé de manière bidirectionnelle.

6. Épandeur centrifuge selon la revendication 5, dans lequel le module de couple (9) comprend un arbre de mesure préchargé dans la direction d'entraînement (13) et dans la direction de traction (15).

7. Épandeur centrifuge selon la revendication 5 ou 6, dans lequel le module de couple (9) est disposé respectivement sur un arbre droit et un arbre gauche (7, 8) côté travail, vus dans la direction de déplacement de l'épandeur centrifuge (1), avec des directions d'entraînement (13) opposées l'une à l'autre et dans lequel l'épandeur centrifuge comprend en outre une unité d'évaluation (20), qui est conçue pour l'évaluation de couples d'entraînement de signes opposés mesurés avec le module de couple.

8. Épandeur centrifuge selon l'une quelconque des revendications 5 à 7, dans lequel l'épandeur centrifuge (1) comprend en outre une unité d'évaluation (20) qui est conçue pour l'évaluation de couples d'entraînement et de couples de traction mesurés avec le module de couple (9).

9. Épandeur centrifuge selon l'une quelconque des revendications précédentes, dans lequel le groupe motopropulseur (2) comprend en outre une boîte de transfert (16) comprenant un entraînement de transfert (17) et deux prises de force de transfert (18, 19), qui, vues dans la direction de déplacement de l'épandeur centrifuge (1), sont associées à des disques d'épandage droit et gauche (3, 4), l'accouplement à friction (11) étant disposé entre l'arbre côté puissance (5) et l'entraînement de transfert (17).

10. Épandeur centrifuge selon l'une quelconque des revendications 1 à 8, comprenant en outre une boîte de transfert (16) comprenant un entraînement de transfert (17) et deux prises de force de transfert (18, 19), qui, vues dans la direction de déplacement, sont associées à des disques d'épandage droit et gauche (3, 4), l'accouplement à friction (11) étant disposé respectivement entre la prise de force de transfert (18, 19) et l'arbre côté travail (7, 8) associé.

11. Épandeur centrifuge selon au moins l'une quelconque des revendications précédentes, dans lequel le dispositif d'entraînement en rotation (6) est un raccord de prise de force couplé de manière rigide en rotation à l'arbre côté puissance (5).

12. Épandeur centrifuge selon au moins l'une quelconque des revendications 1 à 10, dans lequel le dispositif d'entraînement en rotation (6) est un moteur d'entraînement disposé au niveau de l'épandeur centrifuge (1) et couplé de manière rigide en rotation à l'arbre côté puissance (5).
